# EUROPEAN PATENT APPLICATION

(11) **EP 4 485 991 A1**
(43) Date of publication of application: **01.01.2025**
(21) Application number: 23806802.7
(22) Date of filing: 11.05.2023
(51) Int. Cl.: H04W 24/02

(54) **NETWORKING METHOD AND NETWORKING APPARATUS**

(30) Priority: 16.05.2022 CN 202210530201
(71) Applicant: Huawei Technologies Co., Ltd., Shenzhen, Guangdong 518129 (CN)
(72) Inventor: YAN, Fachan, Shenzhen, Guangdong 518129 (CN); ZHANG, Kaibing, Shenzhen, Guangdong 518129 (CN); XU, Tianliang, Shenzhen, Guangdong 518129 (CN); MENG, Qinghu, Shenzhen, Guangdong 518129 (CN); LIU, Chengwei, Shenzhen, Guangdong 518129 (CN); LU, Yi, Shenzhen, Guangdong 518129 (CN); WANG, Ayong, Shenzhen, Guangdong 518129 (CN)
(74) Representative: Goddar, Heinz J.
(86) International application number: PCT/CN2023/093474
(87) International publication number: WO 2023/221850

(57) **Abstract**

Embodiments of this application provide a networking method and a networking apparatus. The method includes: receiving a subnet parameter allocation request message sent by a first gateway; allocating, based on the subnet parameter request message, different first parameters and a same second parameter to first subdevices belonging to different categories; and sending a first subnet parameter including the first parameter and the second parameter to the first gateway. In this technical solution, when there are a plurality of first gateways in an entire house, a cloud server or a hub device does not need to perform a forwarding process when controlling subdevices in batches across gateways, to improve user experience.

## Description

This application claims priority to Chinese Patent Application No. 202210530201.7, filed with the China National Intellectual Property Administration on May 16, 2022 and entitled "NETWORKING METHOD AND NETWORKING APPARATUS", which is incorporated herein by reference in its entirety.

### TECHNICAL FIELD

Embodiments of this application relate to the field of electronic technologies, and more specifically, to a networking method and a networking apparatus.

### BACKGROUND

When there are a plurality of wireless mesh (mesh) gateways in an entire house, each mesh gateway may include a plurality of mesh subdevices. In this way, each mesh gateway may form a subnet. When a user wants to control a plurality of mesh subdevices in batches, the plurality of mesh subdevices may be in different mesh gateways, and the mesh subdevices that communicate with each other across the mesh gateways need to perform a forwarding operation through a cloud server or a hub device. Consequently, the plurality of mesh subdevices may asynchronously perform an operation due to a network delay. User experience deteriorates.

### SUMMARY

Embodiments of this application provide a networking method and a networking apparatus, so that when there are a plurality of mesh gateways in an entire house, a cloud server or a hub device does not need to perform a forwarding process when controlling mesh subdevices in batches across mesh gateways, to improve user experience.

According to a first aspect, a networking method is provided. The method includes: receiving a subnet parameter allocation request message sent by a first gateway; allocating, based on the subnet parameter request message, different first parameters and a same second parameter to first subdevices belonging to different categories; and sending a first subnet parameter including the first parameter and the second parameter to the first gateway.

For example, the first gateway may be a mesh gateway, or may be a Bluetooth gateway. The first subdevice may be a mesh subdevice. There may be one or more first subdevices.

In this embodiment of this application, the method may be applied to a cloud server or a hub device. When network configuration is performed on the first subdevice, the cloud server or the hub device may receive the subnet parameter request message sent by the first gateway, allocate the different first parameters and the same second parameter to the first subdevices belonging to different categories, and allocate the first parameter and the second parameter to a corresponding first subdevice through a corresponding first gateway. In this way, the user can control subdevices in batches across gateways and perform scenario linkage in a local area network, and the cloud server or the hub device does not need to perform forwarding, so that when the subdevices perform a user operation, a network delay is low, and execution actions are more synchronized, thereby improving user experience. Further, for first subdevices with different category attributes, different first parameters are used to distinguish subsystems of different categories, thereby improving security of the subsystems.

With reference to the first aspect, in some implementations of the first aspect, the allocating, based on the subnet parameter request message, different first parameters and a same second parameter to first subdevices belonging to different categories includes: generating the first parameter and the second parameter based on the subnet parameter request message.

In this embodiment of this application, after receiving the subnet parameter request message sent by the first gateway, the cloud server or the hub device may generate the first parameter and the second parameter, that is, generate the first parameter and the second parameter when necessary, so that a waste of resources of the server or the hub device can be avoided.

With reference to the first aspect, in some implementations of the first aspect, the allocating, based on the subnet parameter request message, different first parameters and a same second parameter to first subdevices belonging to different categories includes: obtaining the first parameter and the second parameter from a pre-stored subnet parameter.

In this embodiment of this application, the cloud server or the hub device may pre-store the subnet parameter. After receiving the subnet parameter request message sent by the first gateway, the cloud server or the hub device obtains the first parameter and the second parameter from the pre-stored subnet parameter, so that efficiency of allocating the subnet parameter can be improved.

With reference to the first aspect, in some implementations of the first aspect, before the receiving a subnet parameter allocation request message sent by a first gateway, the method further includes: receiving the first parameter and the second parameter that are sent by a first application.

For example, the first application may include a page used to configure the subnet parameter, and the user may configure the first parameter and the second parameter on the page. It should be understood that a parameter other than the first parameter and the second parameter in the subnet parameters may also be configured on the page.

In this embodiment of this application, the user may send the configured first parameter and second parameter to the cloud server or the hub device, so that the user can freely configure the subnet parameter, thereby improving user experience.

With reference to the first aspect, in some implementations of the first aspect, the first parameter includes an application layer data key, and the second parameter includes a network layer data key; or the first parameter includes an application layer data key and a multicast address, and the second parameter includes a network layer data key; or the first parameter is empty, and the second parameter includes an application layer data key and a network layer data key.

With reference to the first aspect, in some implementations of the first aspect, the method further includes: sending a subnet parameter update message to the first gateway; and after completing identity authentication with the first subdevice, sending an updated second subnet parameter to the first gateway.

In this embodiment of this application, the updated second subnet parameter is sent to the first gateway, so that the first subdevice can be prevented from using a same subnet parameter for a long time, thereby improving security of an all-in-one smart home.

With reference to the first aspect, in some implementations of the first aspect, the sending a subnet parameter update message to the first gateway includes: periodically sending the subnet parameter update message to the first gateway.

In this embodiment of this application, the subnet parameter update message is periodically sent to the first gateway, so that the mesh subdevice can be prevented from using a same subnet parameter for a long time, thereby further improving security of an all-in-one smart home.

With reference to the first aspect, in some implementations of the first aspect, the method further includes: receiving a subnet parameter update request message sent by the first gateway; and after completing identity authentication with the first subdevice based on the subnet parameter update request message, sending an updated second subnet parameter to the first gateway.

In this embodiment of this application, the updated second subnet parameter is sent to the first gateway in response to the subnet parameter update request message sent by the first gateway, so that the first subdevice can be prevented from using a same subnet parameter for a long time, thereby improving security of an all-in-one smart home.

With reference to the first aspect, in some implementations of the first aspect, the method further includes: sending, to the first gateway, a message for deregistering the first subnet parameter.

In this embodiment of this application, the cloud server or the hub device may further send, to the first gateway, the message for deregistering the first subnet parameter, so that the first subnet parameter can be disabled, to avoid parameter disorder.

According to a second aspect, a networking method is provided. The method includes: sending a subnet parameter allocation request message to a cloud server or a hub device; and receiving a first subnet parameter sent by the cloud server or the hub device, where the first subnet parameter includes different first parameters and a same second parameter that are allocated by the cloud server or the hub device based on the subnet parameter request message to first subdevices belonging to different categories.

In this embodiment of this application, the method may be applied to a first gateway (for example, a mesh gateway). When network configuration is performed on the first subdevice, the subnet parameter allocation request message may be sent to the cloud server or the hub device, and the first subnet parameter sent by the cloud server or the hub device may be sent to a corresponding subdevice. In this technical solution, the first gateway may control subdevices in batches across gateways or perform a scenario linkage operation based on the subnet parameter allocated by the cloud server or the hub device, and the cloud server or the hub device does not need to perform a forwarding operation, thereby improving user experience.

With reference to the second aspect, in an implementation of the second aspect, the method further includes: receiving a subnet parameter update message sent by the cloud server or the hub device; sending the subnet parameter update message to the first subdevice; and after the cloud server or the hub device completes identity authentication with the first subdevice, receiving a second subnet parameter sent by the cloud server or the hub device; and sending the second subnet parameter to the first subdevice.

According to the technical solution in this embodiment of this application, the first subdevice can be prevented from using a same subnet parameter for a long time, thereby improving security of an all-in-one smart home.

With reference to the second aspect, in an implementation of the second aspect, the method further includes: receiving a subnet parameter update request message sent by the first subdevice; sending the subnet parameter update request message to the cloud server or the hub device; after the cloud server or the hub device completes identity authentication with the first subdevice, receiving a second subnet parameter sent by the cloud server or the hub device; and sending the second subnet parameter to the first subdevice.

According to the technical solution in this embodiment of this application, the first subdevice can be prevented from using a same subnet parameter for a long time, thereby improving security of an all-in-one smart home.

According to a third aspect, a networking method is provided, including: when network configuration is performed on a first subdevice, allocating different first parameters and a same second parameter to first subdevices belonging to different categories; and sending a first subnet parameter including the first parameter and the second parameter to the first subdevice.

In this embodiment of this application, the method may be applied to a hub device (for example, a router), and a first gateway (for example, a mesh gateway) may be integrated into the hub device.

In this embodiment of this application, when network configuration is performed on the first subdevice, the different first parameters and the same second parameter are allocated to the first subdevices belonging to different categories. In this technical solution, subdevices can be controlled in batches across gateways and scenario linkage can be performed in a local area network, and the cloud server or the hub device does not need to perform forwarding, so that when the subdevices execute a user operation, a network delay is low, and execution actions are more synchronized, thereby improving user experience. Further, for first subdevices with attributes of different categories, different first parameters are used to distinguish subsystems of different categories, thereby improving security of the subsystems.

With reference to the third aspect, in an implementation of the third aspect, before the allocating different first parameters and a same second parameter to first subdevices belonging to different categories, the method further includes: receiving the first parameter and the second parameter that are sent by a first application.

For example, the first application may include a page used to configure the subnet parameter, and the user may configure the first parameter and the second parameter on the page. It should be understood that a parameter other than the first parameter and the second parameter in the subnet parameters may also be configured on the page.

In this embodiment of this application, the user may send the configured first parameter and second parameter to the hub device, so that the user can freely configure the subnet parameter, thereby improving user experience.

With reference to the third aspect, in an implementation of the third aspect, the method further includes: sending a subnet parameter update message to the first subdevice; and after completing identity authentication with the first subdevice, sending an updated second subnet parameter to the first subdevice.

In this embodiment of this application, the updated second subnet parameter is sent to the first subdevice, so that the first subdevice can be prevented from using a same subnet parameter for a long time, thereby improving security of an all-in-one smart home.

With reference to the third aspect, in an implementation of the third aspect, the sending a subnet parameter update message to the first subdevice includes: periodically sending the subnet parameter update message to the first subdevice.

In this embodiment of this application, the updated second subnet parameter is periodically sent to the first subdevice, so that the first subdevice can be prevented from using a same subnet parameter for a long time, thereby further improving security of an all-in-one smart home.

With reference to the third aspect, in an implementation of the third aspect, the method further includes: receiving a subnet parameter update request message sent by the first subdevice; and after completing identity authentication with the first subdevice, sending an updated second subnet parameter to the first subdevice.

In this embodiment of this application, the updated second subnet parameter is sent to the first subdevice in response to the subnet parameter update request message sent by the first subdevice, so that the first subdevice can be prevented from using a same subnet parameter for a long time, thereby improving security of an all-in-one smart home.

With reference to the third aspect, in an implementation of the third aspect, the method further includes: sending, to the first subdevice, a message for deregistering the first subnet parameter.

In this embodiment of this application, the hub device may further send, to the first subdevice, the message for deregistering the first subnet parameter, so that the first subnet parameter can be disabled, to avoid parameter disorder.

With reference to the third aspect, in some implementations of the third aspect, the first parameter includes an application layer data key, and the second parameter includes a network layer data key; or the first parameter includes an application layer data key and a multicast address, and the second parameter includes a network layer data key; or the first parameter is empty, and the second parameter includes an application layer data key and a network layer data key.

According to a fourth aspect, a networking apparatus is provided, including one or more processors and one or more memories. The one or more memories store one or more computer programs, the one or more computer programs include instructions, and when the instructions are executed by the one or more processors, the networking method according to any one of the first aspect and the possible implementations of the first aspect is performed.

According to a fifth aspect, a networking apparatus is provided, including one or more processors and one or more memories. The one or more memories store one or more computer programs, the one or more computer programs include instructions, and when the instructions are executed by the one or more processors, the networking method according to any one of the first aspect and the possible implementations of the second aspect is performed.

According to a sixth aspect, a networking apparatus is provided, including one or more processors and one or more memories. The one or more memories store one or more computer programs, the one or more computer programs include instructions, and when the instructions are executed by the one or more processors, the networking method according to any one of the first aspect and the possible implementations of the third aspect is performed.

According to a seventh aspect, a chip is provided. The chip includes a processor and a communication interface, the communication interface is configured to: receive a signal, and transmit the signal to the processor, and the processor processes the signal, so that the networking method according to any one of the first aspect and the possible implementations of the first aspect is performed.

According to an eighth aspect, a chip is provided. The chip includes a processor and a communication interface, the communication interface is configured to: receive a signal, and transmit the signal to the processor, and the processor processes the signal, so that the networking method according to any one of the second aspect and the possible implementations of the second aspect is performed.

According to a ninth aspect, a chip is provided. The chip includes a processor and a communication interface, the communication interface is configured to: receive a signal, and transmit the signal to the processor, and the processor processes the signal, so that the networking method according to any one of the third aspect and the possible implementations of the third aspect is performed.

According to a tenth aspect, a computer-readable storage medium is provided. The computer-readable storage medium stores computer instructions, and when the computer instructions are run on a computer, the networking method according to any one of the first aspect and the possible implementations of the first aspect is performed.

According to an eleventh aspect, a computer-readable storage medium is provided. The computer-readable storage medium stores computer instructions, and when the computer instructions are run on a computer, the networking method according to any one of the second aspect and the possible implementations of the second aspect is performed.

According to a twelfth aspect, a computer-readable storage medium is provided. The computer-readable storage medium stores computer instructions, and when the computer instructions are run on a computer, the networking method according to any one of the third aspect and the possible implementations of the third aspect is performed.

According to a thirteenth aspect, a computer program product is provided, including computer instructions. When the computer instructions are run on a computer, the networking method according to any one of the first aspect and the possible implementations of the first aspect is performed.

According to a fourteenth aspect, a computer program product is provided, including computer instructions. When the computer instructions are run on a computer, the networking method according to any one of the second aspect and the possible implementations of the second aspect is performed.

According to a fifteenth aspect, a computer program product is provided, including computer instructions. When the computer instructions are run on a computer, the networking method according to any one of the third aspect and the possible implementations of the third aspect is performed.

### BRIEF DESCRIPTION OF DRAWINGS

FIG. 1 is a diagram in which a mesh subdevice accesses a mesh network;
FIG. 2 is a schematic flowchart of configuring a network for a mesh subdevice;
FIG. 3 is a schematic of networking between mesh subdevices;
FIG. 4 is a diagram of a system framework of a networking method according to an embodiment of this application;
FIG. 5 is a schematic flowchart of a networking method according to an embodiment of this application;
FIG. 6 is a schematic flowchart of another networking method according to an embodiment of this application;
FIG. 7 is a schematic of networking between mesh subdevices formed by using the networking method in FIG. 5;
FIG. 8 is a diagram of a system framework of another networking method according to an embodiment of this application;
FIG. 9 is a schematic flowchart of another networking method according to an embodiment of this application;
FIG. 10 is a schematic flowchart of updating a subnet parameter according to an embodiment of this application;
FIG. 11 is another schematic flowchart of updating a subnet parameter according to an embodiment of this application;
FIG. 12 is a schematic flowchart of a networking method according to an embodiment of this application;
FIG. 13 is an example flowchart of another networking method according to an embodiment of this application; and
FIG. 14 is an example flowchart of another networking method according to an embodiment of this application.

### DESCRIPTION OF EMBODIMENTS

The following describes technical solutions of embodiments in this application with reference to accompanying drawings.

Before the technical solutions of this application are described, some terms that may be used in this application are described as follows:
Mesh gateway: a gateway that supports a Bluetooth mesh protocol. In a mesh network with a mesh gateway, there is a connection relationship between the mesh gateway and each mesh subdevice, and there is also a connection relationship between the mesh subdevices, so as to form a meshed Bluetooth interconnection network. In embodiments of this application, an example in which a first gateway is a mesh gateway is used for description. It should be understood that the first gateway may alternatively be another gateway, for example, a Bluetooth gateway.

Universally unique identifier (universally unique identifier, UUID): a unique number corresponding to different services, which is an individual used to distinguish different services and service features.

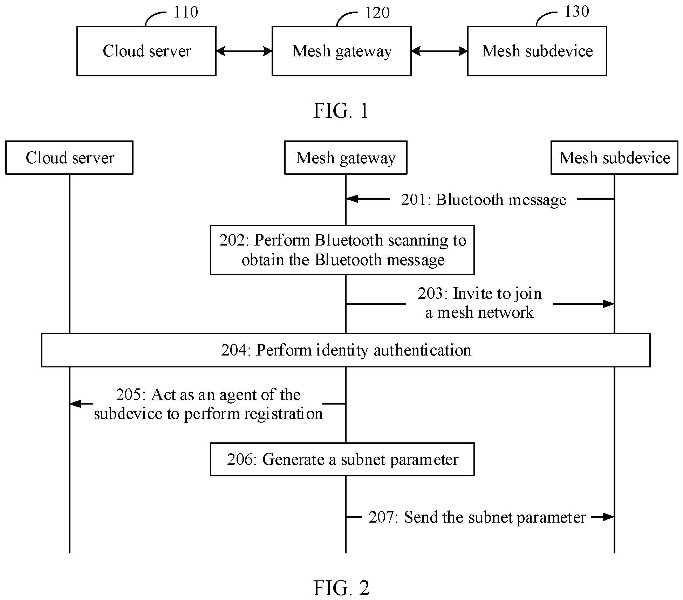

FIG. 1 is a diagram in which a mesh subdevice accesses a mesh network. As shown in FIG. 1, a mesh gateway 120 may be used as an intermediate device or a functional unit between a mesh subdevice 130 and a cloud server 110, and may act as an agent of the mesh subdevice 130 to register with the cloud server 110.

It should be understood that there may be one or more mesh subdevices 130. When the mesh subdevice includes a plurality of devices, the plurality of devices may belong to a same category, or may belong to different categories.

FIG. 2 is a schematic flowchart of a method for configuring a network for a mesh subdevice. As shown in FIG. 2, the method 200 may include step 201 to step 207.

201: The mesh subdevice broadcasts a Bluetooth message.

For example, the mesh subdevice broadcasts a specific Bluetooth message of a universally unique identifier (universally unique identifier, UUID). For example, the Bluetooth message may be a network configuration request message.

202: A mesh gateway performs Bluetooth scanning to obtain the Bluetooth message.

For example, when performing Bluetooth scanning, the mesh gateway may perform step 203 after obtaining the specific Bluetooth message through scanning.

203: The mesh gateway invites the mesh subdevice to join a mesh subnet.

In some embodiments, after obtaining the specific Bluetooth message through scanning, the mesh gateway may send an invite message to the mesh subdevice, so that the mesh subdevice joins the mesh subnet.

204: Perform identity authentication.

In some embodiments, during identity authentication, the mesh subdevice may send a device public key to the mesh gateway. The mesh gateway sends the device public key of the mesh subdevice to a cloud server or a hub device, and receives a public key sent by the cloud server or the hub device. The mesh gateway sends the public key to the mesh subdevice, so as to complete identity authentication.

205: The mesh gateway acts as an agent of the mesh subdevice to complete registration.

It should be understood that, because the mesh subdevice does not have a capability of accessing uplink Wi-Fi, the mesh gateway needs to act as an agent of the mesh subdevice to complete registration in the cloud server or the hub device.

206: The mesh gateway generates a subnet parameter.

For example, the mesh gateway may include a mesh protocol stack, and a mesh subnet parameter may be automatically generated by using the mesh protocol stack.

In some embodiments, the mesh subnet parameter may include a network layer data key (netKey), an application layer data key (appKey), a device key (deviceKey), a unicast address (unicast address), and a multicast address (group address). The netKey may be used to encrypt and decrypt network layer data in the mesh subnet. The appKey may be used to encrypt and decrypt application layer data in the mesh subnet. The deviceKey is used to encrypt/decrypt configuration information. The unicast address is used to uniquely identify an address allocated to the mesh subdevice in a network configuration process. The multicast address is used to represent a group address, and the group address may be shared by one mesh subdevice or a plurality of subdevices.

207: The mesh gateway sends the subnet parameter to the mesh subdevice.

It should be understood that, that the mesh gateway sends the subnet parameter to the mesh subdevice may also be understood as that the mesh gateway allocates the subnet parameter to the mesh subdevice, so that the mesh subdevice may join the mesh subnet to complete network configuration.

It may be understood that one mesh gateway may correspond to one mesh subnet, and mesh subdevices in the mesh subnet may share a set of subnet parameters, so that the mesh subdevices in the mesh subnet may be controlled in batches through the mesh gateway.

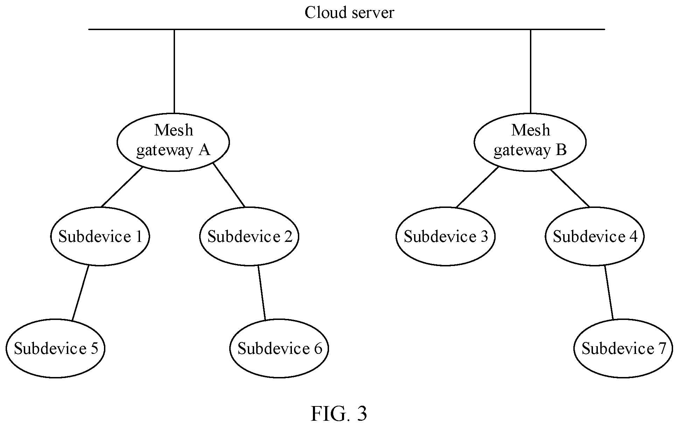

However, a plurality of mesh gateways coexist. For example, a mesh gateway A and a mesh gateway B exist in an entire house, and both the mesh gateway A and the mesh gateway B include a plurality of mesh subdevices. FIG. 3 is a schematic of networking between mesh subdevices.

Refer to FIG. 3. The mesh gateway A and the mesh gateway B may be included in the entire house. A subnet of the mesh gateway A may include a mesh subdevice 1, a mesh subdevice 2, a mesh subdevice 5, and a mesh subdevice 6. A subnet of the mesh gateway B may include a mesh subdevice 3, a mesh subdevice 4, and a mesh subdevice 7.

A user may control the mesh subdevice 1, the mesh subdevice 2, the mesh subdevice 5, and the mesh subdevice 6 in batches through the mesh gateway A, and control the mesh subdevice 3, the mesh subdevice 4, and the mesh subdevice 7 in batches through the mesh gateway B. However, mesh subdevices in the mesh gateway A and the mesh network B cannot communicate with each other. When mesh subdevices need to be controlled in batches across mesh subnets, a cloud server or a hub device needs to perform a forwarding operation. Consequently, the mesh subdevices may be controlled asynchronously due to a network delay. User experience deteriorates.

In view of this, embodiments of this application provide a networking method and a networking apparatus, so that when there are a plurality of mesh gateways, a cloud server or a hub device does not need to perform a forwarding process when controlling mesh subdevices in batches across mesh gateways, to improve user experience.

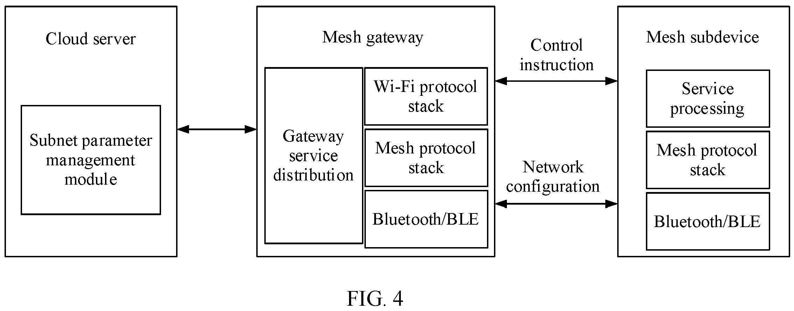

The following describes the technical solutions of this application with reference to FIG. 4 to FIG. 12.

FIG. 4 is a diagram of a system framework of a networking method according to an embodiment of this application. As shown in FIG. 4, the system may include a cloud server, a mesh gateway, and a mesh subdevice.

In some embodiments, the cloud server may include a mesh subnet parameter management module. The mesh subnet parameter management module may be configured to manage mesh subnet parameters, for example, for mesh subdevices in a mesh gateway, generate a set of mesh subnet parameters, or for mesh subdevices of a same category, generate a set of mesh subnet parameters.

The mesh gateway may include a gateway service distribution module, a Wi-Fi protocol stack, a mesh protocol stack, and Bluetooth/Bluetooth low energy (Bluetooth low energy, BLE), and the like. The gateway service distribution module may be configured to distribute a related service to the mesh subdevice. The mesh protocol stack may be configured to process a mesh protocol interaction packet. The Bluetooth/BLE may be configured to process Bluetooth interaction data. The Wi-Fi protocol stack may be used by the mesh gateway to access an uplink Wi-Fi hotspot.

The mesh subdevice may include a service processing module, a mesh protocol stack, and Bluetooth/BLE. The service processing module may be configured to process a related service delivered by the mesh gateway. The mesh protocol stack may be configured to process a mesh protocol interaction packet. The Bluetooth/BLE may be configured to process Bluetooth interaction data.

In some embodiments, a connection may be established between the cloud server and the mesh gateway through a Hilink channel, so that the cloud server may exchange data with the mesh gateway through the Hilink channel. Control signaling between the mesh gateway and the mesh subdevice may be transferred through mesh broadcast. When network configuration is performed on the mesh subdevice, data may be exchanged through Bluetooth/BLE broadcast.

In some embodiments, the cloud server may alternatively be replaced with a hub device, for example, a router or a switch. This is not limited in embodiments of this application.

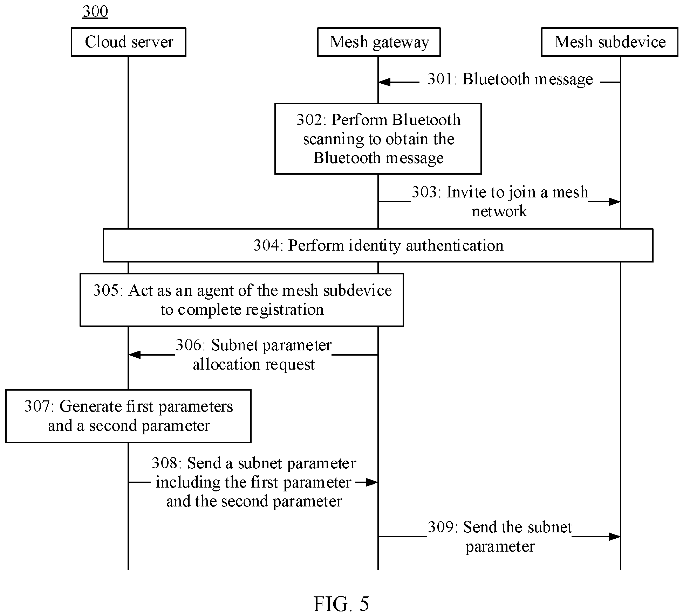

FIG. 5 is an example flowchart of a networking method according to an embodiment of this application. As shown in FIG. 5, the method 300 may include step 301 to step 309.

301: A mesh subdevice broadcasts a Bluetooth message.

302: A mesh gateway performs Bluetooth scanning to obtain the Bluetooth message.

303: The mesh gateway invites the mesh subdevice to join a mesh subnet.

304: Perform identity authentication.

305: The mesh gateway acts as an agent of the mesh subdevice to complete registration.

It should be understood that for steps 301 to 305, reference may be made to the related descriptions of steps 201 to 205. For brevity, details are not described again.

306: The mesh gateway sends a subnet parameter allocation request message to a cloud server.

For example, the mesh gateway sends the subnet parameter allocation request message to the cloud server, to request the cloud server to allocate a subnet parameter. It should be understood that there may be a plurality of mesh gateways.

For example, the subnet parameter may include a netKey, an appKey, a deviceKey, a unicast address, and a multicast address.

307: The cloud server generates different first parameters and a same second parameter for mesh subdevices belonging to different categories, where the second parameter is different from the first parameter.

In some embodiments, the subnet parameter may include the first parameter, the second parameter, the deviceKey, the unicast address, and the multicast address. In some other embodiments, the subnet parameter may include the first parameter, the second parameter, the deviceKey, and the unicast address.

In some embodiments, the first parameter may include the appKey, and the second parameter may include the netKey. Alternatively, the first parameter may include the appKey and the multicast address, and the second parameter includes the netKey. Alternatively, the first parameter may not include any parameter, and the second parameter may include the appKey and the netKey. It should be understood that the deviceKey is in a one-to-one correspondence with the mesh subdevice, and the unicast address is in a one-to-one correspondence with the mesh subdevice.

For example, a same appKey 1 is allocated to mesh subdevices having a lighting function, and a same appKey 2 is allocated to mesh subdevices having a security protection function. For example, if a mesh subdevice 1 is a table lamp, and a mesh subdevice 2 is a corridor landscape lamp, the mesh subdevice 1 and the mesh subdevice 2 may share the appKey 1. If a mesh subdevice 3 is a camera, and a mesh subdevice 4 is an intelligent lock, the mesh subdevice 3 and the mesh subdevice 4 may share the appKey 2. For the netKey included in the subnet parameter, the mesh subdevice with the lighting function and the netKey with the security protection function may be the same or different.

In another example, a same appKey 1 is allocated to mesh subdevices having a lighting function, and a same appKey 2 is allocated to mesh subdevices having a security protection function. A user may define a scenario identity (identity document, ID). For example, if a go home ID is used, when the user triggers the scenario to take effect, the mesh gateway may send, through mesh broadcast, a control instruction to a plurality of mesh subdevices having the lighting function and a plurality of mesh subdevices having the security protection function. The mesh subdevice 1 and the mesh subdevice 2 that have the lighting function may turn on a switch according to a control instruction, and the mesh subdevice 3 and the mesh subdevice 4 that have the security protection function may start to work according to a control instruction, so that a scenario operation can be performed in a local area network based on the scenario ID, and the cloud server or a hub device does not need to perform a forwarding operation, thereby improving user experience.

It should be understood that the mesh subdevice 1 and the mesh subdevice 2 may be in a same mesh gateway, or may be in different mesh gateways. The mesh subdevice 3 and the mesh subdevice 4 may be in a same mesh gateway, or may be in different mesh gateways. This is not limited in embodiments of this application.

It should be noted that the cloud server may store a category attribute and a corresponding subnet parameter (for example, the first parameter or the second parameter). When network configuration is performed on a new mesh subdevice, if it is determined that the new mesh subdevice belongs to a specific category, a corresponding subnet parameter (for example, the first parameter or the second parameter) may be correspondingly allocated to the new mesh subdevice.

It should be understood that related information of the mesh subdevice may include identification information or indication information indicating a category of the mesh subdevice. For example, when the mesh subdevice is a device having the lighting function, the identification information of the mesh subdevice may be A; or when the mesh subdevice is a device having the security protection function, the identification information of the mesh subdevice may be B, or the like. In this way, the cloud server may determine the category of the mesh subdevice. Alternatively, the mesh gateway may determine the category of the mesh subdevice. This is not limited in embodiments of this application.

In some other embodiments, the first parameter may not include any parameter, and the second parameter may include the appKey and the netKey. In this case, other parameters of all mesh subdevices in the entire house are the same, except the different deviceKeys, unicast addresses, and multicast addresses of the mesh subdevices. This helps the user perform batch control and perform a scenario association operation.

In some other embodiments, before step 307, the cloud server may generate the first parameter and the second parameter in advance, and store the category attribute and the corresponding subnet parameter. In this case, in step 307, the cloud server may read the first parameter, the second parameter, and the other parameters, and allocate the other parameters to the mesh subdevices.

308: The cloud server sends a subnet parameter including the first parameter and the second parameter to the mesh gateway.

For example, the cloud server sends the generated subnet parameter to the mesh gateway through the Hilink channel, and the subnet parameter may be carried in a function profile (profile) control instruction.

309: The mesh gateway sends the subnet parameter to the mesh subdevice.

For example, after receiving the control instruction, the mesh gateway converts the control instruction into a mesh instruction and broadcasts the mesh instruction, and sends the mesh instruction to the mesh subdevice through a mesh network.

It should be understood that after receiving the mesh instruction, the mesh subdevice obtains the subnet parameter in the mesh instruction through parsing, and then the mesh subdevice may join the mesh subnet corresponding to the mesh gateway, to complete network configuration. In this case, the user can control the mesh subdevices in batches.

In some embodiments, the cloud server may alternatively be replaced with the hub device, for example, a router. In this case, the mesh gateway may be integrated into the hub device and used as a functional unit of the router. This is not limited in embodiments of this application.

In some embodiments, an execution sequence of step 301 to step 309 is not limited. Some steps in step 301 to step 309 may be deleted, not be performed, be replaced, be exchanged, or the like. This is not limited in embodiments of this application.

In this embodiment of this application, when there are a plurality of mesh gateways in the entire house, the cloud server may generate a same second parameter for mesh subdevices in the plurality of mesh gateways in the entire house, generate a same set of first parameters for mesh subdevices belonging to a same category, and allocate the first parameters to corresponding mesh subdevices through corresponding mesh gateways. In this way, the user can control mesh subdevices in batches across mesh gateways and perform scenario linkage in a local area network, and the cloud server or the hub device does not need to perform forwarding, so that when the mesh subdevices perform a user operation, a network delay is low, and execution actions are more synchronized, thereby improving user experience. Further, for mesh subdevices with different category attributes, different first parameters are used to distinguish subsystems of different categories, thereby improving security of the subsystems.

In this embodiment of this application, in a case in which there are a plurality of mesh gateways in the entire house, when one mesh gateway A is offline, a mesh subdevice in the mesh gateway A is hosted to another mesh gateway (for example, the mesh gateway B). Because all mesh subdevices in a subsystem share a set of first parameters, the another mesh gateway does not need to allocate a new first parameter to the mesh subdevice in the mesh gateway. This reduces complexity of a hosting process.

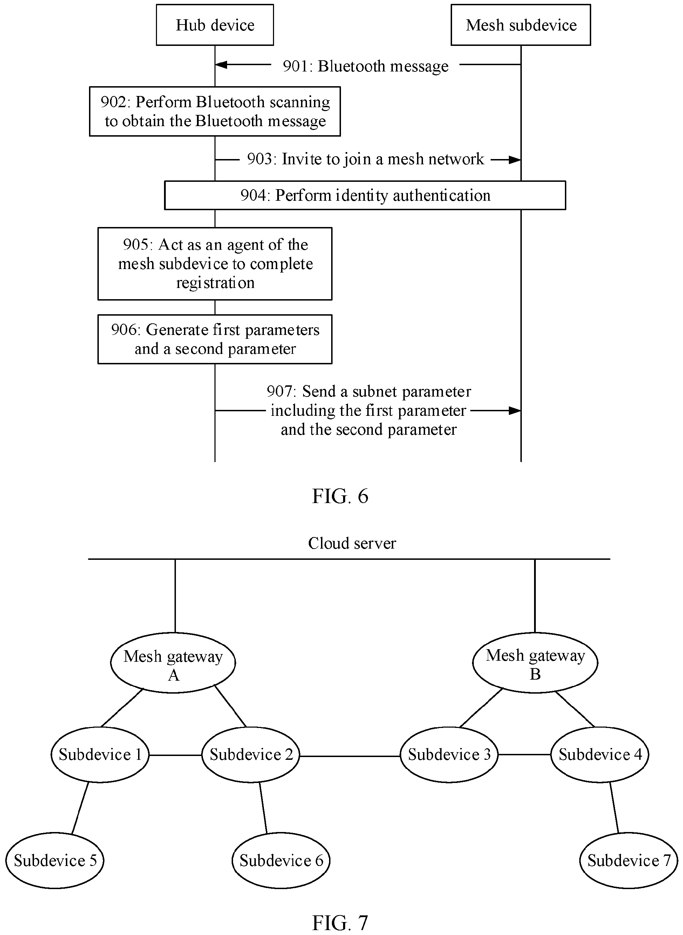

FIG. 6 is a schematic flowchart of another networking method according to an embodiment of this application. As shown in FIG. 6, the method may include step 901 to step 907.

901: A mesh subdevice broadcasts a Bluetooth message.

902: A hub device performs Bluetooth scanning to obtain the Bluetooth message.

903: The hub device invites the mesh subdevice to join a mesh subnet.

904: Perform identity authentication.

905: The hub device acts as an agent of the mesh subdevice to complete registration.

It should be understood that for steps 901 to 905, reference may be made to the related descriptions of steps 201 to 205. For brevity, details are not described again.

906: The hub device generates different first parameters for mesh subdevices belonging to different categories, and generates a same second parameter for all mesh subdevices, where the second parameter is different from the first parameter.

It should be understood that for step 906, reference may be made to the related descriptions of step 307. For brevity, details are not described again.

For example, the hub device may include a subnet parameter management module, configured to generate the first parameter and the second parameter.

907: The hub device sends a subnet parameter including the first parameter and the second parameter to the mesh subdevice.

In this embodiment of this application, the hub device may be, for example, a router or a switch. A mesh gateway may be integrated into the hub device, and the hub device performs a related action of the mesh gateway.

In some embodiments, an execution sequence of step 901 to step 907 is not limited. Some steps in step 901 to step 907 may be deleted, not be performed, be replaced, be exchanged, or the like. This is not limited in embodiments of this application.

In this embodiment of this application, when there are a plurality of mesh gateways in the entire house, the hub device may generate a same second parameter for mesh subdevices in the plurality of mesh gateways in the entire house, and generate a same set of first parameters for mesh subdevices belonging to a same category. In this way, the user can control mesh subdevices in batches across mesh gateways and perform scenario linkage in a local area network, so that when the mesh subdevices perform a user operation, a network delay is low, and execution actions are more synchronized, thereby improving user experience. Further, for mesh subdevices with different category attributes, different first parameters are used to distinguish subsystems of different categories, thereby improving security of the subsystems.

FIG. 7 is a schematic of networking between mesh subdevices formed by using the networking method in FIG. 5. As shown in FIG. 7, a mesh gateway A and a mesh gateway B may be included in an entire house.

The mesh gateway A may include a subdevice 1, a subdevice 2, a subdevice 5, and a subdevice 6, and the mesh gateway B may include a subdevice 3, a subdevice 4, and a subdevice 7.

Because all mesh subdevices of a same category attribute in the entire house share a set of first parameters, for a same target subdevice, both the mesh gateway A and the mesh gateway B may control the target subdevice, so that a success rate of controlling the target subdevice to perform an operation is higher.

In some cases, to further improve user experience, a user may configure a subnet parameter in an application (application, App).

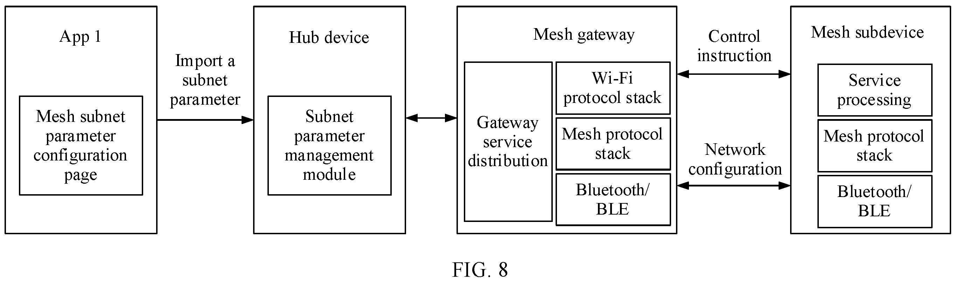

FIG. 8 is a diagram of a system framework of another networking method according to an embodiment of this application. As shown in FIG. 8, the system may include an app 1, a hub device, a mesh gateway, and a mesh subdevice.

In some embodiments, the app 1 may include a mesh subnet parameter configuration page, and a user may configure a subnet parameter on the mesh subnet parameter configuration page. Then, the configured subnet parameter may be imported into the hub device, and a subnet parameter module in the hub device manages and maintains the subnet parameter.

It should be understood that for other descriptions of the mesh gateway, the mesh subdevice, and the hub device, reference may be made to the related descriptions. For brevity, details are not described again.

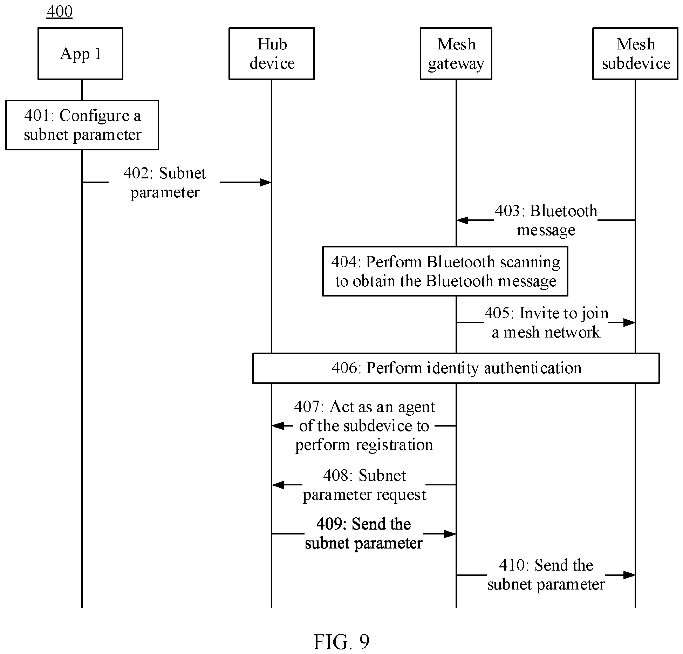

FIG. 9 is a schematic flowchart of another networking method according to an embodiment of this application. As shown in FIG. 9, the method 400 may include step 401 to step 410.

401: A user configures a subnet parameter in an app 1.

For example, the app 1 may provide a configuration page for configuring the subnet parameter, and the user may configure the subnet parameter on the configuration page.

In a possible implementation, the user may set, on the configuration page, a set of second parameters to being shared by all mesh subdevices, where the second parameters may include an appKey 1 and a netKey. In this way, all mesh subdevices in an entire house can be controlled in batches and a scenario linkage operation can be implemented.

In another possible implementation, the user may set, on the configuration page, first parameters of mesh subdevices of a same category to same parameters, to distinguish mesh subdevices of different categories, so as to improve security. For example, a lighting subsystem shares the appKey 1, and a security protection subsystem shares an appKey 2. It should be understood that other subnet parameters (for example, the netKey or a multicast address) may be set to be the same or different for both the lighting subsystem and the security protection subsystem.

402: Import the configured subnet parameter into a hub device in response to an operation of the user.

For example, the hub device may be a router. In this case, the user may import the configured subnet parameter into the router. It should be understood that the hub device may alternatively be a switch.

403: The mesh subdevice broadcasts a Bluetooth message.

404: A mesh gateway performs Bluetooth scanning to obtain the Bluetooth message.

In some embodiments, the mesh gateway may trigger a Bluetooth scanning process in response to the operation of the user.

405: The mesh gateway invites the mesh subdevice to join a mesh subnet.

406: Perform identity authentication.

407: The mesh gateway acts as an agent of the mesh subdevice to complete registration.

It should be understood that for steps 403 to 407, reference may be made to the related descriptions of steps 201 to 205. For brevity, details are not described again.

408: The mesh gateway sends a subnet parameter allocation request message to the hub device.

It should be understood that for step 408, reference may be made to the related descriptions of step 306.

409: The hub device sends the configured subnet parameter to the mesh gateway.

410: The mesh gateway sends the configured subnet parameter to the mesh subdevice.

It should be understood that for steps 409 to 410, reference may be made to the related descriptions of steps 308 to 309. For brevity, details are not described again.

In some embodiments, the mesh gateway may be integrated into the hub device.

In some embodiments, an execution sequence of step 401 to step 410 is not limited. Some steps in step 401 to step 410 may be deleted, not be performed, be replaced, be exchanged, or the like. This is not limited in embodiments of this application.

In this embodiment of this application, before network configuration is performed on the mesh subdevice, the user may configure the subnet parameter in advance in an application, and then import the configured subnet parameter into the hub device. When the mesh gateway adds the mesh subdevice and requests the subnet parameter from the hub device, the hub device may send the configured subnet parameter to the mesh gateway, and the mesh gateway allocates the subnet parameter to the mesh subdevice, to complete network configuration. In this technical solution, the subnet parameter can be configured by the user. This improves user experience.

To further improve security, in the networking method in this application, the subnet parameter can be periodically updated.

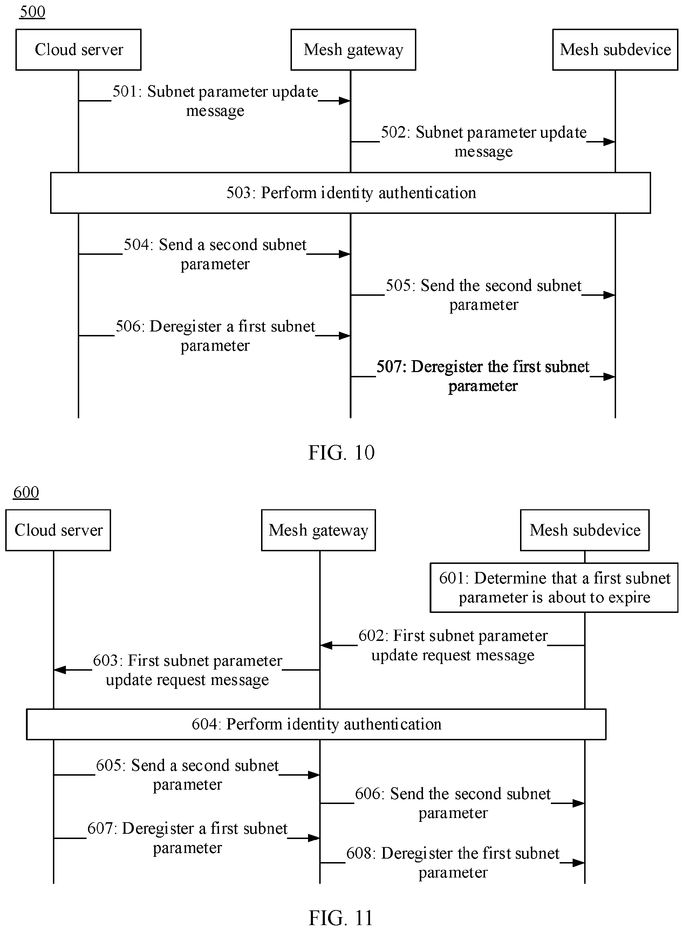

FIG. 10 is a schematic flowchart of updating a subnet parameter according to an embodiment of this application. As shown in FIG. 10, the method 500 may include step 501 to step 507.

501: A cloud server sends a subnet parameter update message to a mesh gateway.

In some embodiments, to improve security, the cloud server may send the subnet parameter update message to the mesh gateway, to update a subnet parameter.

In some other embodiments, the cloud server may periodically send the subnet parameter update message to the mesh gateway. For example, the cloud server may send the subnet parameter update message to the mesh gateway at an interval of preset duration.

It should be understood that a specific value of the preset duration is not limited in embodiments of this application. For example, the preset duration may be 24 hours, 12 hours, or the like.

502: The mesh gateway sends the subnet parameter update message to the mesh subdevice. 503: Perform identity authentication.

It should be understood that for an identity authentication process in step 503, reference may be made to the identity authentication process in step 204. After the identity authentication succeeds, step 504 may be performed.

504: The cloud server sends an updated second subnet parameter to the mesh gateway.

In some embodiments, before step 504, the method 500 may further include step 504a.

504a: The cloud server generates a second subnet parameter.

It should be understood that for step 504a, reference may be made to the related descriptions of step 307.

505: The mesh gateway sends the updated second subnet parameter to the mesh subdevice.

For example, the cloud server sends the updated second subnet parameter to the mesh gateway through a Hilink channel, to update the subnet parameter.

506: The cloud server sends a message for deregistering a first subnet parameter to the mesh gateway.

In this embodiment of this application, a subnet parameter initially allocated by the cloud server to the mesh subdevice is referred to as the first subnet parameter.

For example, the cloud server sends the message for deregistering the first subnet parameter to the mesh gateway through the Hilink channel, to deregister the first subnet parameter.

It should be understood that deregistering the first subnet parameter may be understood as: stopping using the first subnet parameter, or invalidating the first subnet parameter.

507: The mesh gateway sends the message for deregistering the first subnet parameter to the mesh subdevice.

It should be understood that after the mesh subdevice receives the message for deregistering the first subnet parameter, the first subnet parameter is no longer used. In this case, because a new second subnet parameter has been allocated to the mesh subdevice, network configuration may be completed by using the second subnet parameter.

In some embodiments, steps 506 and 507 may alternatively not be performed. In this case, after sending the updated second subnet parameter, the cloud server may disable the first subnet parameter.

In some embodiments, the cloud server may be replaced with a hub device (for example, a router or a switch). In some embodiments, the mesh gateway may be integrated into the hub device.

In some embodiments, steps 504 and 505 may be performed after steps 506 and 507. In some embodiments, step 504 and step 506 may alternatively be carried in one instruction, and step 505 and step 507 may alternatively be carried in one instruction. This is not limited in embodiments of this application.

In some embodiments, an execution sequence of step 501 to step 507 is not limited. Some steps in step 501 to step 507 may be deleted, not be performed, be replaced, be exchanged, or the like. This is not limited in embodiments of this application.

In this embodiment of this application, the cloud server may update or periodically update the subnet parameter, to avoid always using a same set of subnet parameters, thereby improving security of an all-in-one smart home.

FIG. 11 is another schematic flowchart of updating a subnet parameter according to an embodiment of this application. As shown in FIG. 11, the method 600 may include step 601 to step 607.

601: A mesh subdevice determines that a first subnet parameter is about to expire.

In an example, the mesh subdevice may determine, by using indication information, whether the first subnet parameter is about to expire. For example, when allocating the first subnet parameter, a cloud server also indicates that the mesh subdevice needs to request to update the first subnet parameter at an interval of preset duration.

It should be understood that a specific value of the preset duration is not limited in embodiments of this application. For example, the preset duration may be 24 hours, 12 hours, or the like.

In another example, the mesh subdevice may determine, based on a validity period of the first subnet parameter, whether the mesh subdevice is about to expire. For example, when allocating the first subnet parameter, the cloud server also specifies the validity period of the first subnet parameter. In this case, the mesh subdevice may request to update the first subnet parameter within a preset time period before the validity period.

It should be understood that a specific value of the preset time period is not limited in embodiments of this application. For example, the preset time period may be 0 to 5 minutes, 2 to 60 seconds, or the like.

602: The mesh subdevice sends a first subnet parameter update request to a mesh gateway.

It should be understood that the mesh subdevice may send the first subnet parameter update request to the mesh gateway through mesh broadcast.

603: The mesh gateway sends the first subnet parameter update request to the cloud server.

It should be understood that the mesh gateway may convert the mesh broadcast into an instruction that can be identified by the cloud server, and send the instruction to the cloud server.

604: Perform identity authentication.

It should be understood that for an identity authentication process in step 503, reference may be made to the identity authentication process in step 204. After the identity authentication succeeds, step 605 may be performed.

605: The cloud server sends a second subnet parameter to the mesh gateway.

It should be understood that the second subnet parameter may further include an update message. For example, the update message may include a validity period or preset duration, to indicate the mesh subdevice to send a subnet parameter update request.

It should be understood that before step 605, the method 600 may further include step 605a.

605a: The cloud server generates the second subnet parameter.

It should be understood that for step 605a, reference may be made to the related descriptions of step 307.

In some other embodiments, the cloud server may alternatively generate a plurality of groups of subnet parameters when initially generating the first subnet parameter. When the subnet parameter needs to be updated, the cloud server sequentially selects or randomly selects the subnet parameter from the plurality of groups of generated subnet parameters. This is not limited in embodiments of this application. In this technical solution, a case in which a subnet parameter needs to be generated each time the subnet parameter is updated can be avoided, thereby improving efficiency of updating the subnet parameter.

606: The mesh gateway sends the second subnet parameter to the mesh subdevice.

607: The cloud server sends a message for deregistering the first subnet parameter to the mesh gateway.

608: The mesh gateway sends the message for deregistering the first subnet parameter to the mesh subdevice.

In some embodiments, the cloud server may be replaced with a hub device (for example, a router or a switch). In some embodiments, the mesh gateway may be integrated into the hub device.

In some embodiments, steps 607 and 608 may alternatively not be performed. In this case, after sending an updated second subnet parameter, the cloud server may disable the first subnet parameter.

In some embodiments, steps 605 and 606 may be performed after steps 607 and 608. In some embodiments, step 605 and step 607 may alternatively be sent as a message, and step 606 and step 608 may alternatively be sent as a message. This is not limited in embodiments of this application.

In some embodiments, an execution sequence of step 601 to step 608 is not limited. Some steps in step 601 to step 608 may be deleted, not be performed, be replaced, be exchanged, or the like. This is not limited in embodiments of this application.

In this embodiment of this application, the mesh subdevice may determine whether the used first subnet parameter is about to expire, and when determining that the used first subnet parameter is about to expire, may request to update the first subnet parameter. This can avoid always using a same set of subnet parameters, thereby improving security of an all-in-one smart home.

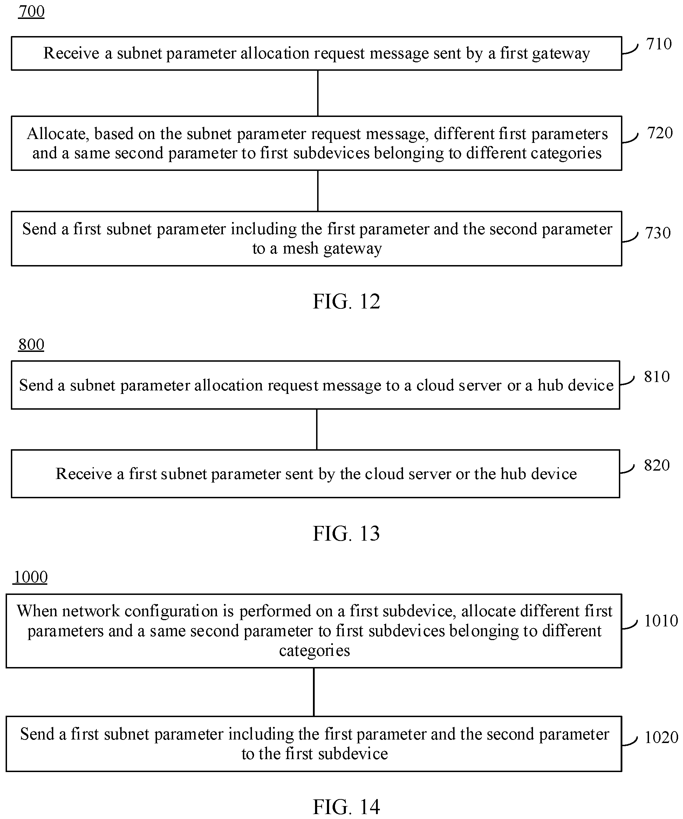

FIG. 12 is a schematic flowchart of a networking method according to an embodiment of this application. As shown in FIG. 12, the method 700 may include step 710 to step 730. The method 700 may be applied to a cloud server or a hub device.

710: Receive a subnet parameter allocation request message sent by a first gateway.

In some embodiments, the first gateway may be the foregoing mesh gateway, or the first gateway may be another gateway, for example, a Bluetooth gateway.

For example, when network configuration is performed on the mesh subdevice, after the cloud server or the hub device completes identity authentication with the mesh subdevice, the cloud server or the hub device receives the subnet parameter allocation request message sent by the mesh gateway.

For example, the subnet parameter may include a netKey, an appKey, a deviceKey, a unicast address, and a multicast address.

720: Allocate, based on the subnet parameter request message, different first parameters and a same second parameter to first subdevices belonging to different categories.

In some embodiments, the first subdevice may be the foregoing mesh subdevice, and there may be one or more first subdevices. This is not limited in embodiments of this application.

In some embodiments, the first parameter is different from the second parameter. For example, the first parameter includes the appKey, and the second parameter includes the netKey; or the first parameter includes the appKey and the multicast address, and the second parameter includes the netKey; or the first parameter is empty, and the second parameter includes the appKey and the netKey.

It should be understood that for step 720, reference may be made to the related descriptions of step 307. For brevity, details are not described again.

730: Send a first subnet parameter including the first parameter and the second parameter to the first gateway.

It should be understood that for step 730, reference may be made to the related descriptions of step 308. For brevity, details are not described again.

In this embodiment of this application, when network configuration is performed on the first subdevice, the cloud server or the hub device may receive the subnet parameter request message sent by the first gateway, allocate the different first parameters and the same second parameter to the first subdevices belonging to different categories, and allocate the first parameter and the second parameter to a corresponding first subdevice through a corresponding first gateway. In this way, the user can control subdevices in batches across gateways and perform scenario linkage in a local area network, and the cloud server or the hub device does not need to perform forwarding, so that when the subdevices perform a user operation, a network delay is low, and execution actions are more synchronized, thereby improving user experience. Further, for first subdevices with different category attributes, different first parameters are used to distinguish subsystems of different categories, thereby improving security of the subsystems.

In some embodiments, the allocating, based on the subnet parameter request message, different first parameters and a same second parameter to first subdevices belonging to different categories includes:
generating the first parameter and the second parameter based on the subnet parameter request message.

In this embodiment of this application, refer to step 307. The cloud server or the hub device may generate the first parameter and the second parameter when receiving the subnet parameter request message of the mesh gateway. In this technical solution, the first parameter and the second parameter may be generated when necessary, so that a waste of resources of the cloud server or the hub device can be avoided.

In some embodiments, the allocating, based on the subnet parameter request message, different first parameters and a same second parameter to first subdevices belonging to different categories includes:
obtaining the first parameter and the second parameter from a pre-stored subnet parameter.

In this embodiment of this application, the cloud server or the hub device may alternatively pre-store the subnet parameter. After receiving the subnet parameter request message sent by the first gateway, the cloud server or the hub device obtains the first parameter and the second parameter from the pre-stored subnet parameter, so that efficiency of allocating the subnet parameter can be improved.

It should be understood that the pre-stored subnet parameter may alternatively be generated by the cloud server or the hub device. A moment at which the cloud server or the hub device generates the subnet parameter is not limited in embodiments of this application. For example, the subnet parameter may be generated before the subnet parameter request message is received, and the subnet parameter may be stored.

In some embodiments, before the receiving a subnet parameter allocation request message sent by a first gateway, the method 700 may further include: receiving the first parameter and the second parameter that are sent by a first application.

For example, refer to steps 401 and 402. The first application may include a page used to configure the subnet parameter, and the user may configure the first parameter and the second parameter on the page. It should be understood that a parameter other than the first parameter and the second parameter in the subnet parameters may also be configured on the page.

In this embodiment of this application, the user may send the configured first parameter and second parameter to the cloud server or the hub device, so that the user can freely configure the subnet parameter, thereby improving user experience.

In some embodiments, the method 700 may further include: sending a subnet parameter update message to the first gateway; and after completing identity authentication with the first subdevice, sending an updated second subnet parameter to the first gateway.

For example, refer to steps 501 to 504. To improve security of an all-in-one smart home, the cloud server or the hub device may send the subnet parameter update message to the mesh gateway, and after completing identity authentication with the mesh subdevice, send the updated second subnet parameter to the mesh subdevice.

In this embodiment of this application, the updated second subnet parameter is sent to the first gateway, so that the first subdevice can be prevented from using a same subnet parameter for a long time, thereby improving security of an all-in-one smart home.

In some embodiments, the sending a subnet parameter update message to the first gateway includes: periodically sending the subnet parameter update message to the first gateway.

In this embodiment of this application, the subnet parameter update message is periodically sent to the first gateway, so that the first subdevice can be prevented from using a same subnet parameter for a long time, thereby further improving security of an all-in-one smart home.

In some embodiments, the method 700 may further include: receiving a subnet parameter update request message sent by the first gateway; and after completing identity authentication with the first subdevice based on the subnet parameter update request message, sending an updated second subnet parameter to the first gateway.

For example, refer to steps 601 to 606. After determining that the first subnet parameter is about to expire, the mesh subdevice sends the subnet parameter update request message to the mesh gateway. The cloud server or the hub device receives the subnet parameter update request message, and sends the updated second subnet parameter to the mesh gateway after completing identity authentication with the mesh subdevice.

In this embodiment of this application, the updated second subnet parameter is sent to the first gateway in response to the subnet parameter update request message sent by the first gateway, so that the first subdevice can be prevented from using a same subnet parameter for a long time, thereby improving security of an all-in-one smart home.

In some embodiments, the method 700 may further include: sending, to the first gateway, a message for deregistering the first subnet parameter.

For example, refer to steps 506 and 507 or steps 607 and 608, the cloud server or the hub device may send, to the mesh gateway, the message for deregistering the first subnet parameter.

In this embodiment of this application, the cloud server or the hub device may further send, to the first gateway, the message for deregistering the first subnet parameter, so that the first subnet parameter can be disabled, to avoid parameter disorder.

FIG. 13 is a schematic flowchart of another networking method according to an embodiment of this application. As shown in FIG. 13, the method 800 may include step 810 to step 820. The method 800 may be applied to a first gateway, for example, a mesh gateway.

810: Send a subnet parameter allocation request message to a cloud server or a hub device.

For example, refer to step 306. The mesh gateway sends the subnet parameter allocation request message to the cloud server, to perform network configuration on the mesh subdevice.

820: Receive a first subnet parameter sent by the cloud server or the hub device, where the first subnet parameter includes different first parameters and a same second parameter that are allocated by the cloud server or the hub device based on the subnet parameter request message to first subdevices belonging to different categories.

For example, refer to step 308. The mesh gateway receives the subnet parameter that includes the first parameter and the second parameter and that is sent by the cloud server. It should be understood that the subnet parameter includes the different first parameters and the same second parameter that are allocated by the cloud server or the hub device to the first subdevices belonging to different categories based on the subnet parameter request message.

In this embodiment of this application, when network configuration is performed on the first subdevice, the subnet parameter allocation request message may be sent to the cloud server or the hub device, and the first subnet parameter sent by the cloud server or the hub device may be sent to a corresponding subdevice. In this technical solution, the first gateway may control subdevices in batches across gateways or perform a scenario linkage operation based on the subnet parameter allocated by the cloud server or the hub device, and the cloud server or the hub device does not need to perform a forwarding operation, thereby improving user experience.

In some embodiments, the method 800 may further include: receiving a subnet parameter update message sent by the cloud server or the hub device; sending the subnet parameter update message to the first subdevice; and after the cloud server or the hub device completes identity authentication with the first subdevice, receiving a second subnet parameter sent by the cloud server or the hub device; and sending the second subnet parameter to the first subdevice. For example, refer to steps 501 to 505. According to the technical solution in this embodiment of this application, the first subdevice can be prevented from using a same subnet parameter for a long time, thereby improving security of an all-in-one smart home.

In some embodiments, the method 800 may further include: receiving a subnet parameter update request message sent by the first subdevice; sending the subnet parameter update request message to the cloud server or the hub device; after the cloud server or the hub device completes identity authentication with the first subdevice, receiving a second subnet parameter sent by the cloud server or the hub device; and sending the second subnet parameter to the first subdevice.

For example, refer to steps 602 to 606. According to the technical solution in this embodiment of this application, the first subdevice can be prevented from using a same subnet parameter for a long time, thereby improving security of an all-in-one smart home.

FIG. 14 is a schematic flowchart of another networking method according to an embodiment of this application. As shown in FIG. 14, the method 1000 may include step 1010 to step 1020. The method 1000 may be applied to a hub device, for example, a router.

1010: When network configuration is performed on a first subdevice, allocate different first parameters and a same second parameter to first subdevices belonging to different categories.

For example, refer to step 906. The hub device may allocate the different first parameters and the same second parameter to the first subdevices belonging to different categories.

1020: Send a first subnet parameter including the first parameter and the second parameter to the first subdevice.

In this embodiment of this application, a first gateway (for example, a mesh gateway) may be integrated into the hub device, and the hub device may perform a related action of the first gateway. The first subdevice may be a mesh subdevice.

For example, refer to step 907. The hub device sends the subnet parameter including the first parameter and the second parameter to the mesh subdevice.

In this embodiment of this application, when network configuration is performed on the first subdevice, the different first parameters and the same second parameter are allocated to the first subdevices belonging to different categories. In this technical solution, subdevices can be controlled in batches across gateways and scenario linkage can be performed in a local area network, and the cloud server or the hub device does not need to perform forwarding, so that when the subdevices execute a user operation, a network delay is low, and execution actions are more synchronized, thereby improving user experience. Further, for first subdevices with attributes of different categories, different first parameters are used to distinguish subsystems of different categories, thereby improving security of the subsystems.

In some embodiments, before the allocating different first parameters and a same second parameter to first subdevices belonging to different categories, the method 1000 may further include:
receiving the first parameter and the second parameter that are sent by a first application.

For example, refer to steps 401 and 402. The first application may include a page used to configure the subnet parameter, and the user may configure the first parameter and the second parameter on the page. It should be understood that a parameter other than the first parameter and the second parameter in the subnet parameters may also be configured on the page.

In this embodiment of this application, the user may send the configured first parameter and second parameter to the hub device, so that the user can freely configure the subnet parameter, thereby improving user experience.

In some other embodiments, the first parameter and the second parameter may alternatively be generated by the hub device when network configuration is performed on the first subdevice. Alternatively, the first parameter and the second parameter may be generated by the hub device before network configuration is performed on the first subdevice, and the first parameter and the second parameter are obtained from stored subnet parameters during network configuration. This is not limited in embodiments of this application.

In some embodiments, the method 1000 may further include:
sending a subnet parameter update message to the first subdevice; and after completing identity authentication with the first subdevice, sending an updated second subnet parameter to the first subdevice.

For example, the mesh gateway may be integrated into the hub device, for example, a router. Refer to steps 501 to 505. The hub device may send the subnet parameter update message to the first subdevice, and send the updated second subnet parameter to the first subdevice after completing identity authentication with the first subdevice.

In this embodiment of this application, the updated second subnet parameter is sent to the first subdevice, so that the first subdevice can be prevented from using a same subnet parameter for a long time, thereby improving security of an all-in-one smart home.

In some embodiments, the sending a subnet parameter update message to the first subdevice includes:
periodically sending the subnet parameter update message to the first subdevice.

In this embodiment of this application, the subnet parameter update message is periodically sent to the first subdevice, so that the first subdevice can be prevented from using a same subnet parameter for a long time, thereby further improving security of an all-in-one smart home.

In some embodiments, the method 1000 may further include:
receiving a subnet parameter update request message sent by the first subdevice; and
after completing identity authentication with the first subdevice, sending an updated second subnet parameter to the first subdevice.

For example, the mesh gateway may be integrated into the hub device, for example, a router. Refer to steps 602 to 606. The hub device receives the subnet parameter update request message sent by the first subdevice, and sends the updated second subnet parameter to the first subdevice after completing identity authentication with the first subdevice.

In this embodiment of this application, the updated second subnet parameter is sent to the first subdevice in response to the subnet parameter update request message sent by the first subdevice, so that the first subdevice can be prevented from using a same subnet parameter for a long time, thereby improving security of an all-in-one smart home.

In some embodiments, the method 1000 may further include:
sending, to the first subdevice, a message for deregistering the first subnet parameter.

For example, refer to steps 506 and 507 or steps 607 and 608, the hub device may send, to the first subdevice, the message for deregistering the first subnet parameter. In this way, the first subnet parameter can be disabled, to avoid parameter disorder.

In some embodiments, the first parameter is different from the second parameter. For example, the first parameter includes the appKey, and the second parameter includes the netKey; or the first parameter includes the appKey and the multicast address, and the second parameter includes the netKey; or the first parameter is empty, and the second parameter includes the appKey and the netKey.

An embodiment of this application further provides a networking apparatus, including one or more processors and one or more memories. The one or more memories store one or more computer programs, the one or more computer programs include instructions, and when the instructions are executed by the one or more processors, the networking method in any one of the foregoing possible implementations is performed.

For example, the networking apparatus may be a cloud server, a hub device, a gateway, or the like.

An embodiment of this application further provides a chip. The chip includes a processor and a communication interface. The communication interface is configured to: receive a signal, and transmit the signal to the processor, and the processor processes the signal, so that the networking method according to any one of the foregoing possible implementations is performed.

This embodiment further provides a computer-readable storage medium. The computer-readable storage medium stores computer instructions, and when the computer instructions are run on a computer, the networking method in the foregoing embodiment is performed.

This embodiment further provides a computer program product. When the computer program product runs on a computer, the computer is enabled to perform the related steps, so that the networking method in the foregoing embodiment is performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be positioned in one position, or may be distributed on a plurality of network units. Some or all of the units may be selected based on actual requirements to achieve the objectives of the solutions in embodiments.

In addition, function units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on this understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A networking method, comprising:
receiving a subnet parameter allocation request message sent by a first gateway;
allocating, based on the subnet parameter request message, different first parameters and a same second parameter to first subdevices belonging to different categories; and
sending a first subnet parameter comprising the first parameter and the second parameter to the first gateway.

2. The method according to claim 1, wherein the allocating, based on the subnet parameter request message, different first parameters and a same second parameter to first subdevices belonging to different categories comprises:
generating the first parameter and the second parameter based on the subnet parameter request message.

3. The method according to claim 1, wherein the allocating, based on the subnet parameter request message, different first parameters and a same second parameter to first subdevices belonging to different categories comprises:
obtaining the first parameter and the second parameter from a pre-stored subnet parameter.

4. The method according to any one of claims 1 to 3, wherein before the receiving a subnet parameter allocation request message sent by a first gateway, the method further comprises:
receiving the first parameter and the second parameter that are sent by a first application.

5. The method according to any one of claims 1 to 4, wherein the first parameter comprises an application layer data key, and the second parameter comprises a network layer data key; or the first parameter comprises an application layer data key and a multicast address, and the second parameter comprises a network layer data key; or the first parameter is empty, and the second parameter comprises an application layer data key and a network layer data key.

6. The method according to any one of claims 1 to 5, wherein the method further comprises:
sending a subnet parameter update message to the first gateway; and
after completing identity authentication with the first subdevice, sending an updated second subnet parameter to the first gateway.

7. The method according to claim 6, wherein the sending a subnet parameter update message to the first gateway comprises:
periodically sending the subnet parameter update message to the first gateway.

8. The method according to any one of claims 1 to 5, wherein the method further comprises:
receiving a subnet parameter update request message sent by the first gateway; and
after completing identity authentication with the first subdevice based on the subnet parameter update request message, sending an updated second subnet parameter to the first gateway.

9. The method according to any one of claims 6 to 8, wherein the method further comprises:
sending, to the first gateway, a message for deregistering the first subnet parameter.

10. A networking method, comprising:
sending a subnet parameter allocation request message to a cloud server or a hub device; and
receiving a first subnet parameter sent by the cloud server or the hub device, wherein the first subnet parameter comprises different first parameters and a same second parameter that are allocated by the cloud server or the hub device based on the subnet parameter request message to first subdevices belonging to different categories.

11. The method according to claim 10, wherein the method further comprises:
receiving a subnet parameter update message sent by the cloud server or the hub device;
sending the subnet parameter update message to the first subdevice;
after the cloud server or the hub device completes identity authentication with the first subdevice, receiving a second subnet parameter sent by the cloud server or the hub device; and
sending the second subnet parameter to the first subdevice.

12. The method according to claim 10, wherein the method further comprises:
receiving a subnet parameter update request message sent by the first subdevice;
sending the subnet parameter update request message to the cloud server or the hub device;
after the cloud server or the hub device completes identity authentication with the first subdevice, receiving a second subnet parameter sent by the cloud server or the hub device; and
sending the second subnet parameter to the first subdevice.

13. A networking method, comprising:
when network configuration is performed on a first subdevice, allocating different first parameters and a same second parameter to first subdevices belonging to different categories; and
sending a first subnet parameter comprising the first parameter and the second parameter to the first subdevice.

14. The method according to claim 13, wherein before the allocating different first parameters and a same second parameter to first subdevices belonging to different categories, the method further comprises:
receiving the first parameter and the second parameter that are sent by a first application.

15. The method according to claim 13 or 14, wherein the method further comprises:
sending a subnet parameter update message to the first subdevice; and
after completing identity authentication with the first subdevice, sending an updated second subnet parameter to the first subdevice.

16. The method according to claim 15, wherein the sending a subnet parameter update message to the first subdevice comprises:
periodically sending the subnet parameter update message to the first subdevice.

17. The method according to claim 13 or 14, wherein the method further comprises:
receiving a subnet parameter update request message sent by the first subdevice; and
after completing identity authentication with the first subdevice, sending an updated second subnet parameter to the first subdevice.

18. The method according to any one of claims 15 to 17, wherein the method further comprises:
sending, to the first subdevice, a message for deregistering the first subnet parameter.

19. The method according to any one of claims 13 to 18, wherein the first parameter comprises an application layer data key, and the second parameter comprises a network layer data key; or the first parameter comprises an application layer data key and a multicast address, and the second parameter comprises a network layer data key; or the first parameter is empty, and the second parameter comprises an application layer data key and a network layer data key.

20. A networking apparatus, comprising one or more processors and one or more memories, wherein the one or more memories store one or more computer programs, the one or more computer programs comprise instructions, and when the instructions are executed by the one or more processors, the networking method according to any one of claims 1 to 19 is performed.

21. A chip, wherein the chip comprises a processor and a communication interface, the communication interface is configured to: receive a signal, and transmit the signal to the processor, and the processor processes the signal, so that the networking method according to any one of claims 1 to 19 is performed.

22. A computer-readable storage medium, wherein the computer-readable storage medium stores computer instructions, and when the computer instructions are run on a computer, the networking method according to any one of claims 1 to 19 is performed.
